# EUROPÄISCHE PATENTSCHRIFT

(11) **EP 0 616 717 B1**
(45) Veröffentlichungstag und Bekanntmachung des Hinweises auf die Patenterteilung: **30.08.1995**
(21) Anmeldenummer: 92923270.0
(22) Anmeldetag: 19.11.1992
(51) Int. Cl.: G09G 3/34, G02F 1/1335

(54) **ANZEIGEVORRICHTUNG MIT EINEM LICHTSENSOR**
DISPLAY APPARATUS WITH A LIGHT SENSOR
DISPOSITIF D'AFFICHAGE AVEC UN PHOTODETECTEUR

(30) Priorität: 10.12.1991 DE 4140647
(43) Veröffentlichungstag der Anmeldung: 28.09.1994
(73) Patentinhaber: ROBERT BOSCH GMBH, 70442 Stuttgart (DE)
(72) Erfinder: JUELIGER, Peter, D-6729 Hagenbach (DE)
(86) Internationale Anmeldenummer: DE9200963
(87) Internationale Veröffentlichungsnummer: WO9312515

(56) Entgegenhaltungen:
- EP-A- 0 115 575
- EP-A- 0 174 497
- DE-U- 8 716 295
- PATENT ABSTRACTS OF JAPAN vol. 14, no. 223 (P-1046)11. Mai 1990 & JP-A-02053040

## Beschreibung

### Stand der Technik

Die Erfindung geht aus von einem Lichtsensor für die Helligkeitsregelung einer Beleuchtungseinrichtung für eine Anzeigevorrichtung nach der Gattung des Hauptanspruchs. Eine solche Anzeigevorrichtung ist aus Patent Abstracts of Japan, vol. 14, no. 223 (p-1046), bekannt. Bei bekannten Beleuchtungseinrichtungen wird beispielsweise zur Beleuchtung eine transflexive oder transmissiven Flüssigkristall-Anzeige über einen Lichtleiter flächenhaft beleuchtet. Dabei wird zur Steuerung der Helligkeit der Anzeige ein Fototransistor verwendet, der im Lichtstrom angeordnet ist und die Beleuchtungseinrichtung in Abhängigkeit vom Lichtstrom regelt. In der EP-A-115 575 wird ein Lichtleiter vorgeschlagen, der mit zwei sich gegenüberliegenden Stirnflächen ausgebildet ist und sowohl das durch die Windschutzscheibe eines Kraftfahrzeuges einfallende Licht als auch das Licht aus dem Beobachtungsraum vor dem Armaturenbrett erfaßt. An seitlich angeordneten Sensoren wird das gesamte Licht erfaßt, das auf einen milchig weißen Plastikkörper des Lichtleiters fällt. Mit seinen relativ großen Abmessungen ist der Lichtleiter hinter der Windschutzscheibe im Bereich der Armaturenabdeckung eines Kraftfahrzeuges angeordnet. Er benötigt relativ viel Platz, der in diesem Bereich für andere elektrische Einrichtungen benötigt wird. Des weiteren muß die Anordnung des Lichtleiters hinter der Windschutzscheibe bereits bei der Gestaltung des Fahrgastraumes berücksichtigt werden, so daß dem Konstrukteur gewisse Beeinträchtigungen in der Gestaltungsfreiheit auferlegt sind.

### Vorteile der Erfindung

Der erfindungsgemäße Lichtsensor mit den kennzeichnenden Merkmalen des Hauptanspruchs hat demgegenüber den Vorteil, daß der Lichtsensor mit der Anzeigevorrichtung als kompakte Einheit aufgebaut ist. Ein zusätzlicher Platz im Bereich des Armaturenbrettes ist nicht erforderlich, da der Lichtleiter eine Lichtsammelfolie aufweist, die relativ dünn ist und dadurch die Bauweise der Anzeigevorrichtung kaum verändert. Besonders vorteilhaft ist, daß keine Nachjustage erforderlich ist, da die komplette Anzeigeeinrichtung werksmäßig vormontierbar ist.

Die Verwendung einer Lichtsammelfolie ist deswegen besonders günstig, weil sie aufgrund ihrer Struktur einen Teil des Lichtes auf die Seitenflächen umlenkt, die nicht vom einfallenden Licht beflutet sind. Ordnet man nun einen Sensor an eine der Seitenflächen an, dann empfängt er das umgelenkte Seitenlicht, ohne daß seine Anordnung das Durchlichtverhalten der Sammelfolie stört. Derartige Lichtsammelfolien sind darüber hinaus preiswert auf dem Markt erhältlich. Auch ist vorteilhaft, daß die Lichtsammelfolie die Funktion der Lichtfilterung übernimmt, wenn die Anzeige in einer bestimmten Farbe erscheinen soll.

Durch die in den Unteransprüchen aufgeführten Maßnahmen sind vorteilhafte Weiterbildungen und Verbesserungen des im Hauptanspruch angegebenen Lichtsensors möglich. Besonders vorteilhaft ist, daß die Lichtsammelfolie eine Kunststoffolie ist, da sie bei einem Unfall nicht zersplittert und dadurch ungefährlich ist.

Eine sehr einfache Ausgestaltung der Anordnung ergibt sich besonders durch die Verwendung eines Fotowiderstandes einer Fotodiode oder eines Fototransistorelementes, da sie das empfangene Licht direkt in ein entsprechendes elektrisches Signal umwandeln können.

Wird der Lichtleiter beispielsweise in Blickrichtung direkt vor einer LCD-Anzeige angeordnet, dann wird er durch das auf die Anzeigevorrichtung fallende Licht durchflutet. Für diesen Fall kann die Anzeigenhelligkeit als Flächenintegral über die gesamte Fläche der Anzeigevorrichtung auf einen gewünschten Wert geregelt werden.

Durch Verspiegeln der freien Seitenflächen wird der Lichtaustritt in den Sensor vorteilhaft verstärkt.

Besonders vorteilhaft ist, daß durch die Bildung eines Korrekturfaktors für die Beleuchtungsregelung die Anzeigevorrichtung unabhängig von der Anzahl der angesteuerten Elemente gleichmäßig hell erscheint.

Ein weiterer Vorteil ist auch darin zu sehen, daß die Helligkeit der Anzeige mittels eines Einstellelementes vorgebbar ist. Dadurch kann die Helligkeit der Anzeige individuell an die Wünsche des Fahrers angepaßt werden.

Bei einer Anordnung des Lichtleiters hinter der Anzeigevorrichtung, aber vor einer Beleuchtungseinrichtung, erfolgt dagegen die Regelung der Helligkeit im wesentlichen durch die Beleuchtungseinrichtung und durch die transmissiv geschalteten Elemente der Anzeigevorrichtung.

Dadurch ist eine einfache beleuchtungsabhängige Helligkeitsregelung möglich.

Weitere Vorteile sind der Beschreibung entnehmbar.

### Zeichnung

Ausführungsbeispiele der Erfindung sind in der Zeichnung dargestellt und in der nachfolgenden Beschreibung näher erläutert. Es zeigen Figur 1 ein erstes Ausführungsbeispiel des Lichtleiters, Figur 2 eine Auswerteschaltung, Figur 3 die Anordnung des Lichtleiters hinter einer transmessiven LCD-Anzeige, Figur 4 eine Anordnung mit einem Transflektor, Figur 5 die Anordnung des Lichtleiters vor einer LCD-Anzeige und Figur 6 die Anordnung des Lichtleiters vor einer LCD-Anzeige mit Transflektor.

### Beschreibung der Ausführungsbeispiele

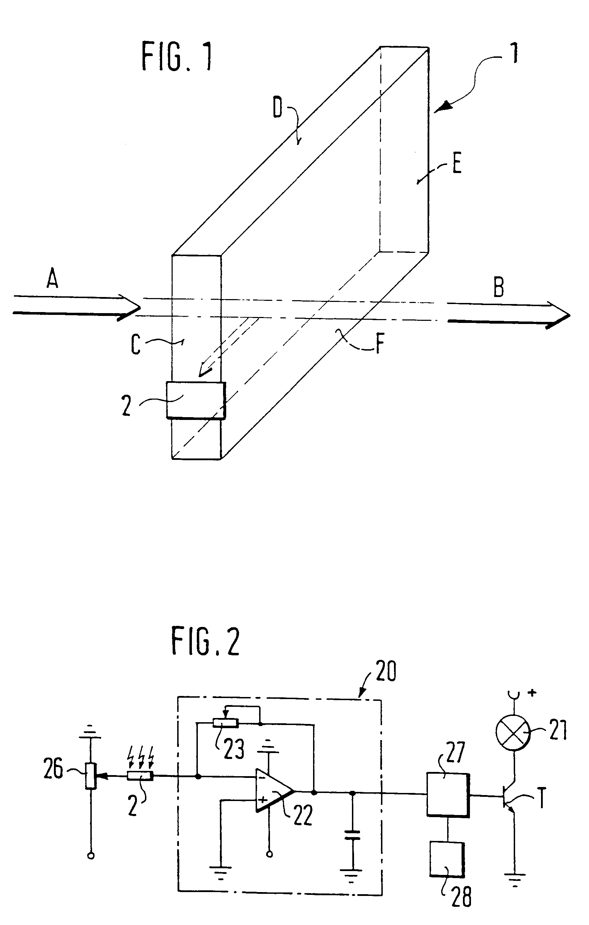

In Figur 1 ist ein erstes Ausführungsbeispiel mit einem quaderförmigen Lichtleiter 1 dargestellt, der an seinen Frontflächen von einem Lichtstrom A in Richtung B beflutet wird. Die Seitenflächen C, D, E, F des Lichtleiters 1 sind relativ schmal ausgebildet. Beispielsweise ist an der Seitenfläche C ein Sensor 2 durch Klebung angebracht. Der Sensor 2 empfängt einen Teil des Lichtstromes A. Er ist mit seiner lichtempfindlichen Fläche in etwa parallel zum Lichtstrom A angeordnet, so daß der Lichtstrom A nicht direkt auf ihn fallen kann. Der Sensor 2 hat elektrische Anschlußleitungen, mit dem ein dem Lichtstrom A proportionales elektrisches Signal abgegriffen werden kann.

Der Lichtleiter 1 weist eine transmissive Filterscheibe auf, die als Lichtsammelfolie ausgebildet ist. Sie koppelt das einfallende Licht teilweise aus und lenkt es auf die Schmalseiten C, D, E, F um. Damit möglichst viel Licht auf den Sensor 2 fallen kann, können die freien Seitenflächen C, D, E, F verspiegelt sein.

Die Lichtsammelfolie ist beispielsweise unter der Bezeichnung LISA von der Firma Baier in verschiedenen Stärken erhältlich.

In Figur 2 ist eine Auswerteschaltung 20 dargestellt, die das elektrische Signal des Sensors 2 zur Regelung der Helligkeit einer nicht dargestellten Anzeigevorrichtung auswertet. Die Auswerteschaltung 20 weist im wesentlichen einen Verstärker 22 auf, der mit üblicher Versorgungsspannung betrieben wird. Zwischen dem Ausgang 25 und einem Eingang des Verstärkers 22 ist ein einstellbarer Widerstand 23 zur Anpassung an den vorgeschalteten Sensor 2 geschaltet. Desweiteren ist an diesem Eingang der Sensor 2 einerseits und mit seinem freien Anschluß andererseits an den Mittenabgriff eines Spannungsteilers 21 angeschlossen. Über den Spannungsteiler 21, der gleichzeitig die Versorgungsspannung für den Sensor 2 liefert, ist die Empfindlichkeit des Sensors 2 einstellbar. Der Ausgang 25 des Verstärkers 22 ist über einen Vergleicher 27 mit dem Steuereingang eines Transistors T verbunden, in dessen Kollektorkreis eine Lampe 21 mit der Versorgungsspannung verbunden ist. An den Vergleicher 27 ist ein Speicher 28 angeschlossen, in dem Kennliniendaten der Lampe 21 gespeichert sind.

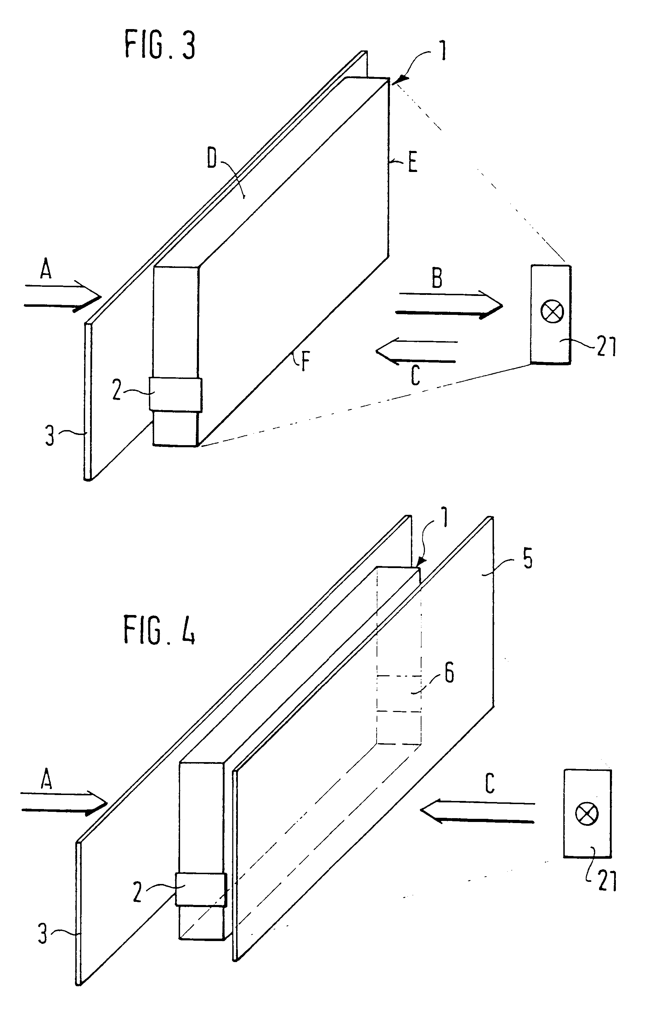

In den Figuren 3 bis 5 sind weitere Ausführungsbeispiele für die Anordnung des Lichtleiters 1 an der Anzeigevorrichtung 3 dargestellt. In Figur 3 wird der in Figur 1 beschriebene Lichtleiter 1 zwischen einer transmissiven Flüssigkristallanzeige (LCD-Anzeige) und der Beleuchtungseinrichtung 21 angeordnet. Aus der Sicht eines Beobachters ist der Lichtleiter 1 hinter der LCD-Anzeige 3 angeordnet und ist daher nicht sichtbar. Wie der Figur 3 entnehmbar ist, fällt das Umgebungslicht A durch die transmissive LCD-Anzeige 3 direkt auf den Lichtleiter 1.

Die Funktionsweise dieser Anordnung wird wie folgt beschrieben. Auf den Lichtleiter 1 fällt gemäß Figur 3 sowohl das Umgebungslicht (Lichtstrom A) als auch der Lichtstrom C der Beleuchtungseinrichtung 21. Beide Lichtströme werden in dem Lichtleiter 1 teilweise auf die Seitenflächen C-F umgelenkt und indirekt vom Sensor 2 erfaßt, der ein entsprechendes Spannungssignal am Ausgang U der Auswerteschaltung 20 abgibt. Um eine möglichst gute Ausleuchtung der Anzeigevorrichtung bei ausreichendem Kontrast zum Umgebungslicht zu erhalten, muß die Beleuchtungseinrichtung 21 derart gesteuert werden, daß ihr störender Einfluß auf den Lichtleiter 1 eliminiert wird. Am einfachsten kann dieses mittels einer Eichmessung durchgeführt werden. Dazu wird die Frontseite des Lichtleiters 1 abgedeckt, so daß nur das Licht der Beleuchtungseinrichtung 21 auf den Lichtleiter 1 fallen kann. Unter diesen Bedingungen ist jetzt durch Variation der Beleuchtungsstärke der Beleuchtungseinrichtung 21, d. h. durch Änderung des Lampenstromes die entsprechende Spannung des Sensors 2 abgreifbar und beispielsweise als Kennlinie für die Beleuchtungseinrichtung 21 speicherbar. Wird nun die Frontseite des Lichtleiters 1 wieder aufgedeckt, so daß auch das Umgebungslicht auf diesen fällt, dann mißt der Sensor 2 eine entsprechend größere Spannung. Durch Substraktion des entsprechenden Lichtstromes der im Speicher 28 gespeicherten Kennlinie kann der Einfluß der Beleuchtungseinrichtung 21 im Vergleicher 27 eliminiert werden, so daß man einen Wert für das Umgebungslicht des Lichtstromes A erhält. Den zugeordneten Wert der Kennlinie kann man beispielsweise durch Messung des Stromes durch die Beleuchtungseinrichtung 21 messen und diese Werte abspeichern. Mit diesen ermittelten Wert für den Lichtstrom A des Umgebungslichtes kann nun wunschgemäß die Beleuchtungseinrichtung 21 angesteuert werden. Über den Spannungsteiler 26 ist noch eine individuelle Feinabstufung für den Kontrast für die Anzeigevorrichtung 3 möglich.

Anstelle der Beleuchtungseinrichtung 21, die insbesondere in Verbindung einer beleuchtbaren Flüssigkristall-Anzeige verwendbar ist, ist das Sensorsignal auch für die Helligkeitsregelung anderer Anzeigen wie Elektroluminizenzanzeigen o. ä. verwendbar.

In einem weiteren Ausführungsbeispiel gemäß der Figur 4 ist die in Figur 3 vorgeschlagene Ausführung durch einen zusätzlichen Transflektor 5 erweitert, der zwischen dem Lichtleiter 1 und der Beleuchtungseinrichtung 21 angeordnet ist. Der Transflektor hat die Aufgabe, daß er den Lichtstrom A reflektiert, so daß zur Beleuchtung der LCD-Anzeige 3 im wesentlichen das Umgebungslicht verwendet wird. Die Beleuchtungseinrichtung 21 dient als Hilfsbeleuchtung, deren Licht ungehindert durch den Transflektor durchgeht und die LCD-Anzeige 3 zusätzlich beleuchtet. Die Steuerung der Helligkeit der Hilfsbeleuchtung erfolgt in der gleichen Art und Weise, wie zuvor beschrieben.

In weiterer Ausgestaltung der Erfindung ist gemäß Figur 4 ein weiterer Sensor 6 an einer Schmalseite E des Lichtleiters 1 angeordnet. In diesem Ausführungsbeispiel kann der weitere Sensor 6 für die Eichmessung der Beleuchtungseinrichtung 21 verwendet werden.

Zur Ermittlung der Einflußgröße der Beleuchtungseinrichtung 21 ist weiter vorgesehen, die Beleuchtungsstärke der Beleuchtungseinrichtung 21 schrittweise zu erhöhen und dabei die Spannungsänderung U am Ausgang der Auswerteschaltung 20 zu vergleichen. Aufgrund der iterativen Änderung der Spannung U ist der Einfluß der Beleuchtungseinrichtung 21 bei gleichbleibender Umgebungshelligkeit direkt erfaßbar.

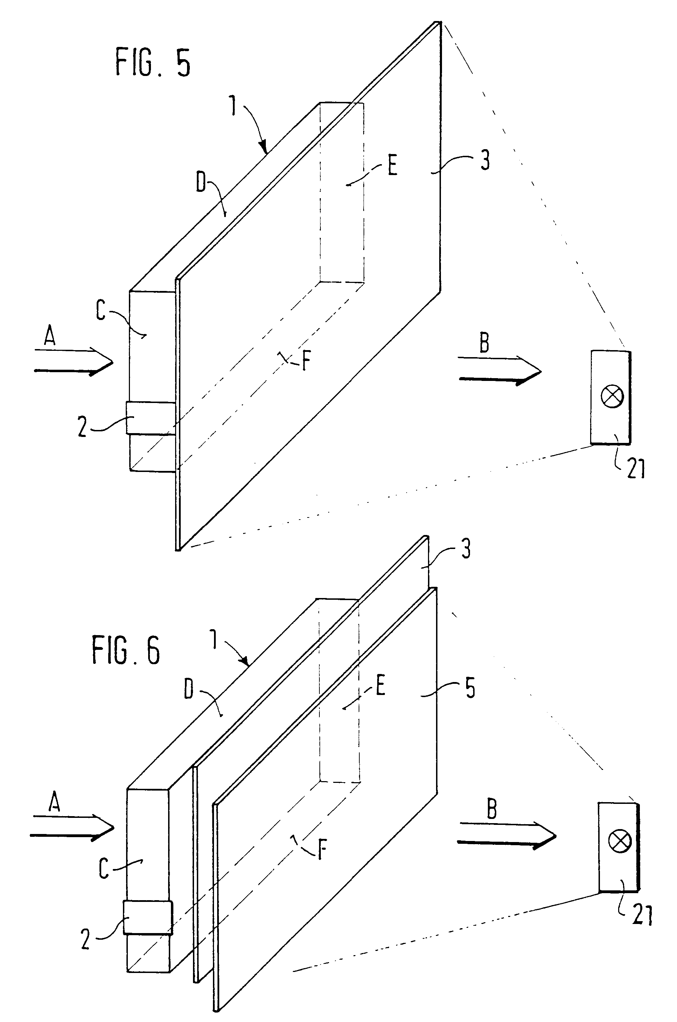

In einem Ausführungsbeispiel nach Figur 5 ist die Anordnung des Lichtleiters vor einer transmissiven LCD-Anzeige 3. Die LCD-Anzeige 3 wird von der hinter ihr angeordneten Beleuchtungseinrichtung 21 beleuchtet. Die Regelung der Beleuchtung erfolgt in ähnlicher Weise, wie sie in Figur 3 beschrieben wurde.

Figur 6 zeigt ein Ausführungsbeispiel einer transflexiven LCD-Anzeigevorrichtung 3, bei der der Lichtleiter 1 ebenfalls vor der LCD-Anzeige 3 angeordnet ist. Die Funktionsweise ist ebenfalls vergleichbar mit dem in Figur 4 dargestellten Ausführungsbeispiel. Allerdings wurde nur ein Sensor 2 verwendet.

Bei den dargestellten Ausführungsbeispielen der Figuren 3, 4, 5, 6 mit der Anordnung der Filterscheibe hinter und vor der LCD-Anzeige können bei der Ermittlung des Einflusses des Umgebungslichtes und des Lichtes der Beleuchtungseinrichtung 21 Fehler auftreten, wenn nur ein Teil der angezeigten Elemente der Anzeigevorrichtung 3 lichtdurchlässig geschaltet ist. Denn wenn im Falle der Figuren 3 und 4 wenig Elemente lichtdurchlässig geschaltet sind, dann ist der von dem Lichtleiter 1 erfaßte Einfluß des Umgebungslichtes entsprechend gering, so daß die Hinterleuchtung verstärkt werden muß. Sind alle Elemente der Anzeigevorrichtung 3 lichtdurchlässig geschaltet, dann wird der maximale Einfluß der Umgebungslichtes 21 erfaßt, so daß die Hinterleuchtung relativ verringert werden muß.

Bei der Anordnung gemäß den Figuren 5 und 6 ist entsprechend der Anzahl der lichtdurchlässig geschalteten Elemente der Einfluß der Beleuchtungseinrichtung (21) zu beachten.

Bei nur teilweise lichtdurchlässiger Anzeigevorrichtung 3 entsteht daher ein Fehler, der von der Anzahl der lichtdurchlässig geschalteten Elemente abhängt. Dieser Fehler ist jedoch leicht korrigierbar. Da aufgrund der Ansteuerung der Anzeigevorrichtung 3 die jeweilige Anzahl der angesteuerten bzw. lichtdurchlässigen Elemente bekannt ist, kann durch Verhältnisbildung zur maximalen Anzahl der Anzeigeelemente ein Faktor gebildet werden, der als Korrekturfaktor für die Steuerung der Beleuchtungseinrichtung 21 zusätzlich verwendbar ist. Der Korrekturfaktor bewirkt bei den Ausführungsbeispielen der Figuren 5 und 6 bei wenigen anzuzeigenden Elementen beispielsweise eine Abschwächung der Hinterleuchtung, während er bei vielen anzuzeigenden Elementen eine Verstärkung bewirkt. Dadurch wird in vorteilhafterweise erreicht, daß unabhängig von der Anzahl der darzustellenden Anzeigeelemente auf der Anzeigevorrichtung 3 stets eine gleich helle und gleich kontrastreiche Anzeige als Bild auf der erscheint, deren Helligkeit sich lediglich mit dem Einfluß der Umgebungshelligkeit ändert. Denn bei hellem Tageslicht muß die Anzeige entsprechend hell beleuchtet werden, während sie bei Fahrten beispielsweise durch einen Tunnel entsprechend reduziert wird, damit sie den Fahrer nicht blendet.

## Patentansprüche

1. Anzeigevorrichtung mit einem Lichtleiter zur Erfassung des Umgebungslichtes vor der Anzeigevorrichtung, beispielsweise in einem Kraftfahrzeug, und mit einem Sensor, der an dem Lichtleiter angeordnet ist und in Abhängigkeit des erfaßten Lichtes ein Steuersignal zur Helligkeitssteuerung der Anzeigevorrichtung an eine Steuerung abgibt, dadurch gekennzeichnet, daß der Lichtleiter (1) eine Lichtsammelfolie aufweist, die wenigstens einen Teil des einfallenden Lichtes zumindest auf eine ihrer Seitenflächen (C, D, E, F) projiziert und daß der Sensor (2) so angeordnet ist, daß er auf aus den Seitenflächen (C, D, E, F) austretendes Licht reagiert.

2. Anzeigevorrichtung nach Anspruch 1, dadurch gekennzeichnet, daß die Lichtsammelfolie (1) eine Kunststoffolie ist.

3. Anzeigevorrichtung nach einem der vorhergehenden Ansprüche, dadurch gekennzeichnet, daß der Sensor (2) an wenigstens einer der Seitenflächen (C, D, E, F) angeordnet ist.

4. Anzeigevorrichtung nach Anspruch 3, dadurch gekennzeichnet, daß der Sensor (2) einen Fotowiderstand, eine Fotodiode oder ein Fototransistorelement aufweist.

5. Anzeigevorrichtung nach einem der vorhergehenden Ansprüche, dadurch gekennzeichnet, daß die Anzeigevorrichtung eine Flüssigkristall-Anzeige (LCD-Anzeige) aufweist.

6. Anzeigevorrichtung nach einem der vorhergehenden Ansprüche, dadurch gekennzeichnet, daß die Helligkeit der Anzeigevorrichtung (3) mittels eines Einstellelementes (26) manuell einstellbar ist.

7. Anzeigevorrichtung nach einem der vorhergehenden Ansprüche, dadurch gekennzeichnet, daß die Seitenflächen (C, D, E, F), die nicht vom Lichtstrom durchflutet werden, wenigstens teilweise verspiegelt sind.

8. Anzeigevorrichtung nach einem der vorhergehenden Ansprüche, dadurch gekennzeichnet, daß eine Meßeinrichtung vorgesehen ist, die die lichtdurchlässig geschalteten Elemente der Anzeigevorrichtung (3) zählt und als Faktor ins Verhältnis zu den maximal lichtdurchlässigen Elementen setzt.

9. Anzeigevorrichtung nach Anspruch 8, dadurch gekennzeichnet, daß mittels des Faktors der Lichtstrom der Beleuchtungseinrichtung (21) in der Weise korrigiert wird, daß bei einer geringen Anzahl von lichtdurchlässigen Anzeigeelementen der Lichtstrom entsprechend verringert wird und umgekehrt bei einer großen Anzahl der lichtdurchlässigen Elemente entsprechend erhöht wird.

10. Anzeigevorrichtung nacheinem der vorhergehenden Ansprüche, dadurch gekennzeichnet, daß der Lichtleiter (1) vor oder hinter der Anzeigevorrichtung (3) angeordnet ist.

## Claims

1. Display device having a light conductor for detecting the ambient light in front of the display device, for example in a motor vehicle, and having a sensor which is arranged on the light conductor and, as a function of the light detected, emits a control signal for controlling the brightness of the display device to a controller, characterized in that the light conductor (1) has a light-collecting film which projects at least a part of the incident light onto at least one of its side surfaces (C, D, E, F), and in that the sensor (2) is arranged such that it reacts to light emerging from the side surfaces (C, D, E, F).

2. Display device according to Claim 1, characterized in that the light-collecting film (1) is a plastic film.

3. Display device according to one of the preceding claims, characterized in that the sensor (2) is arranged on at least one of the side surfaces (C, D, E, F).

4. Display device according to Claim 3, characterized in that the sensor (2) has a photoresistor, a photodiode or a phototransistor element.

5. Display device according to one of the preceding claims, characterized in that the display device has a liquid crystal display (LCD display).

6. Display device according to one of the preceding claims, characterized in that the brightness of the display device (3) can be adjusted manually by means of an adjusting element (26).

7. Display device according to one of the preceding claims, characterized in that the side surfaces (C, D, E, F) through which the light flux does not pass are at least partially reflective.

8. Display device according to one of the preceding claims, characterized in that a measuring device is provided, which counts the elements of the display device (3) which are connected in a transluscent manner and sets them as a factor to the ratio to the maximally transluscent elements.

9. Display device according to Claim 8, characterized in that the light flux of the lighting device (21) is corrected by means of the factor in such a manner that the light flux is correspondingly reduced for a small number of transluscent display elements and, conversely, it is correspondingly increased for a large number of transluscent elements.

10. Display device according to one of the preceding claims, characterized in that the light conductor (1) is arranged in front of or behind the display device (3).

## Revendications

1. Dispositif d'affichage avec un guide de lumière servant à détecter la lumière environnante devant le dispositif d'affichage, par exemple dans un véhicule à moteur, et avec un détecteur qui est disposé sur le guide de lumière et qui, en fonction de la lumière détectée, délivre à une commande un signal de commande servant à régler la luminosité du dispositif d'affichage, caractérisé en ce que le guide de lumière (1) présente un film collecteur de lumière qui projette au moins une partie de la lumière incidente au moins sur l'une de ses faces latérales (C, D, E, F), et en ce que le détecteur (2) est disposé de telle façon qu'il réagisse à la lumière sortant des faces latérales (C, D, E, F).

2. Dispositif d'affichage selon la revendication 1, caractérisé en ce que le film collecteur de lumière (1) est un film en matière plastique.

3. Dispositif d'affichage selon l'une des revendications précédentes, caractérisé en ce que le détecteur (2) est disposé sur au moins l'une des faces latérales (C, D, E, F).

4. Dispositif d'affichage selon la revendication 3, caractérisé en ce que le détecteur (2) présente une photorésistance, une photodiode ou un élément à phototransistor.

5. Dispositif d'affichage selon l'une des revendications précédentes, caractérisé en ce que le dispositif d'affichage présente un affichage à cristaux liquide (affichage à LCD).

6. Dispositif d'affichage selon l'une des revendications précédentes, caractérisé en ce que l'on peut régler manuellement la luminosité du dispositif d'affichage (3) au moyen d'un élément de réglage (26).

7. Dispositif d'affichage selon l'une des revendications précédentes, caractérisé en ce que les faces latérales (C, D, E, F) qui ne sont pas traversées par le flux lumineux, sont pourvues d'un revêtement métallique au moins en partie.

8. Dispositif d'affichage selon l'une des revendications précédentes, caractérisé en ce que l'on prévoit un système de mesure qui compte les éléments du dispositif d'affichage (3) laissant passer la lumière, et qui forme un coefficient en prenant le rapport avec les éléments qui laissent passer la lumière de façon maximale.

9. Dispositif d'affichage selon la revendication 8, caractérisé en ce qu'au moyen du coefficient on corrige le flux de lumière du système d'éclairage (21) d'une manière telle que le flux lumineux soit réduit en conséquence quand il y a un nombre minime d'éléments d'affichage laissant passer la lumière et, inversement, soit augmenté en conséquence dans le cas où il y a un grand nombre d'éléments laissant passer la lumière.

10. Dispositif d'affichage selon l'une des revendications précédentes, caractérisé en ce que le guide de lumière (1) est disposé devant ou derrière le dispositif d'affichage (3).
